# EUROPÄISCHE PATENTSCHRIFT

(11) **EP 2 977 183 B1**
(45) Veröffentlichungstag und Bekanntmachung des Hinweises auf die Patenterteilung: **04.09.2019**
(21) Anmeldenummer: 15002110.3
(22) Anmeldetag: 16.07.2015
(51) Int. Cl.: B29C 49/78

(54) **VERFAHREN UND VORRICHTUNG ZUM TRANSPORT VON VORFORMLINGEN**
METHOD AND DEVICE FOR TRANSPORTING PREFORMS
PROCEDE ET DISPOSITIF DE TRANSPORT D'EBAUCHES

(30) Priorität: 25.07.2014 DE 102014010862
(43) Veröffentlichungstag der Anmeldung: 27.01.2016
(73) Patentinhaber: KHS Corpoplast GmbH, 22145 Hamburg (DE)
(72) Erfinder: Grunwald, Matthias, 22359 Hamburg (DE); Haesendonckx, Frank, 22145 Hamburg (DE); van Hamme, Thomas, 24629 Kisdorf (DE); Herklotz, Thorsten, 22926 Ahrensburg (DE)
(74) Vertreter: Hausfeld, Norbert

(56) Entgegenhaltungen:
- EP-A1- 2 578 504
- EP-A1- 2 910 500
- DE-A1-102009 040 803
- US-A- 4 223 778
- US-A- 4 356 907
- US-A1- 2011 120 833

## Beschreibung

Die vorliegende Erfindung betrifft ein Verfahren zum Transport von Vorformlingen im Bereich einer Blasmaschine zur Blasformung von Behältern aus einem thermoplastischen Material entlang einer als Rollenförderer mit zwei sich insbesondere gegensinnig zueinander drehenden Förderrollen ausgebildeten Sortiereinrichtung gemäß dem Oberbegriff des Anspruchs 1 sowie eine Vorrichtung zur Steuerung eines Verfahrens zum Transport von Vorformlingen im Bereich einer Blasmaschine gemäß dem Oberbegriff des Anspruchs 7 und eine Vorrichtung zur Blasformung von Behältern aus einem thermoplastischen Material zur Durchführung eines erfindungsgemäßen Verfahrens gemäß dem Oberbegriff des Anspruchs 9.

Für die Zuführung von Vorformlingen an eine Blasmaschine, werden die Vorformlinge typischerweise entlang einer Ablaufschiene in einer räumlichen Orientierung mit den Mündungsbereichen nach oben transportiert. Eine Führung der Vorformlinge sowie eine Abstützung der Vorformlinge erfolgt typischerweise an Stützringen, die unterhalb eines Gewindes der Vorformlinge angeordnet sind. Diese Stützringe werden auch als Neckringe bezeichnet. Die Ablaufschiene ist üblicherweise zur Blasmaschine hin abschüssig verlaufend angeordnet, sodass sich in der Reihe der transportierten Vorformlinge ein Staudruck einstellt.

Um bei Blasmaschinen mit einer hohen Produktionskapazität eine zuverlässige Zuführung der Vorformlinge zu gewährleisten, werden relativ lange Ablaufschienen verwendet, um trotz der bei einer Bewegung der Vorformlinge entlang der Ablaufschienen auftretenden Reibungskräfte einen ausreichenden Staudruck der Vorformlinge im Eingangsbereich der Blasmaschine zu erreichen.

Zur Vereinzelung und Sortierung der Vorformlinge kann den Ablaufschienen ein Rollenförderer vorgelagert sein. Dem Rollenförderer ist typischerweise ein Steigförderer vorgelagert. Der Steigförderer übernimmt Vorformlinge aus einem Vorratsbehälter bzw. einem Silo, fördert diese in eine Höhe und übergibt sie unsortiert und ungerichtet an den Rollenförderer. Der Steigförderer arbeitet üblicherweise nach dem Prinzip eines Förderbandes.

Mit Hilfe des Rollenförderers werden die ungeordneten Vorformlinge vereinzelt und sortiert. Dabei richtet der Rollenförderer die Vorformlinge so aus, dass sie in einer Reihe mit der Mündung nach oben am Stützring zwischen zwei etwa parallel verlaufenden Rollen hängend in Längsrichtung der Förderrollen fortbewegt werden. Der Rollenförderer wird mit einer Neigung ausgehend vom Steigförderer in Richtung der Ablaufschiene angeordnet, so dass die Vorformlinge der Schwerkraft folgend auf den geneigten Rollen in Richtung der Ablaufschiene rutschen. Am Ende des Rollenförderers sind die Vorformlinge mit ihren Mündungsabschnitten nach oben orientiert und hintereinander angeordnet, so dass eine geordnete Übergabe an die Ablaufschiene erfolgen kann.

Beim Transport der Vorformlinge innerhalb des Rollenförderers entstehen Lücken, die bis zur Zuführung an die Blasmaschine wieder geschlossen werden müssen, um eine unterbrechungsfreie Versorgung zu gewährleisten. Dafür ist bekannt, zum Beispiel mit einer im Bereich des Rollenförderers angeordneten Staubremse einen zusätzlichen Staudruck in den Vorformlingsreihen zu erzeugen, um durch nachrutschende Vorformlinge eine Lückenschließung zu ermöglichen.

Um die Lücken frühzeitig durch eine aktive Steuerung der Transportvorrichtung bzw. des Rollenförderers zu schließen, müssen die Lücken zunächst zuverlässig erkannt werden. Aus dem Stand der Technik ist bekannt, Lücken mit einer zeitlich aufgelösten Messung zu erfassen. Dafür werden typischerweise Lichtschrankensensoren an wenigen diskreten Positionen platziert. Der Strahlengang der Lichtschranken verläuft typischerweise in dem Zwischenraum der Förderrollen, etwa quer zur Rollenlängsausrichtung. Sobald ein zwischen den Förderrollen transportierter Vorformling die Lichtschranke unterbricht erzeugt der Lichtschrankensensor ein Signal. Lücken zwischen den transportierten Vorformlingen werden dadurch erkannt, dass über einen bestimmten Zeitraum kein Vorformling an der diskreten Position detektiert wird.

Aus US 4 223 778 A und US 2011/120833 A1 sind Fördersysteme mit Rollenförderern für den sortierten Transport von Vorformlingen bekannt, bei denen Lücken in einem Transportstrom der Vorformlinge erkannt werden können durch die Verarbeitung einer Zeitinformation nach Erfassung zweier hintereinander einzeln in den Erfassungsbereich eines Anwesenheitssensors transportierter Vorformlinge.

Aus US 4 356 907 A ist ein Transportsystem für die Zuführung von Vorformlingen an eine Heizvorrichtung einer Blasmaschine bekannt, bei dem Vorformlinge mittels eines Steigförderers aus einem Vorratsbehälter in den Eingangsbereich eines Rollenförderers geschüttet und nach einer ersten Aufreihung und Aufrichtung von dort zur koordinierten Aufteilung in mehrere Transportreihen in separate Greifmulden eines Transportrades übergeben werden. Im Bereich des Rollenförderers ist ein als Lichtschranke ausgebildeter Anwesenheitssensor angeordnet, der bei Erkennung einer Aufstauung von Vorformlingen die Zufuhr über den Steigförderer stoppen kann.

Aus EP 2 578 504 A1 ist eine aseptische Abfüllanlage bekannt, die an verschiedenen Arbeits- und Transportstationen zur Herstellung, zum Transport und zur Zwischenlagerung von Vorformlingen, zur Blasumformung der Vorformlinge in Behälter und schließlich zum Transport und zur Abfüllung der Behälter eingerichtet ist. In der Abfüllanlage werden beispielsweise im Zwischenlagerbereich der Vorformlinge Sensoren zur Überwachung von Füllzuständen der Vorformlingsspeicher verwendet, die Signale zur Steuerung der Nachproduktion bzw. zur Steuerung des Transportstromes der Vorformlinge liefern.

Aus DE 10 2009 040803 A1 ist ein Verfahren zur Blasformung von Behältern aus Vorformlingen bekannt, bei dem sensorisch erfasste Parameter des Blasumformungsvorganges einer Steuereinrichtung zugeführt werden, die unter Verwendung eines Simulationsmodells Abweichungen zwischen Soll- und Istwerten auswertet und auf dieser Grundlage den Blasumformungsprozess beeinflussende Parameter derart verändert, dass Abweichungen zwischen Ist- und Sollwerten minimiert werden.

Aus EP 2 910 500 A1 ist eine Transporteinrichtung wie zum Beispiel ein Rollensortierer für Vorformlinge bekannt, bei dem mittels zwei an unterschiedlichen Stellen der Transporteinrichtung positionierten Messeinrichtungen, wie beispielsweise Lichtschranken oder Kamerasystemen, Belegungszustände erfasst werden und anhand gemessener Werte wenigstens eine Stellgröße der Transporteinrichtung verändert wird.

Nachteilig bei dem beschriebenen Stand der Technik ist, dass die Lichtschranken nur einzelne festgelegte Positionen überwachen und Lücken, die außerhalb dieser überwachten Positionen entstehen, nicht oder sehr spät erkannt werden. Dadurch kommt es zu Versorgungsschwankungen im Transportprozess, was zu Regelungsabweichungen führen kann. In der Folge besteht die Gefahr von Unterbrechungen des Sortierstroms und von Produktionsunterbrechungen der Blasmaschine.

Aufgabe der vorliegenden Erfindung ist es, ein Verfahren und Vorrichtungen bereitzustellen, die einen verbesserten Transport der Vorformlinge bei der Zuführung an die Blasmaschine unterstützen.

Diese Aufgabe wird gelöst durch ein Verfahren mit den Merkmalen des Anspruchs 1, eine Steuerungsvorrichtung mit den Merkmalen des Anspruchs 7 und eine Blasmaschine mit den Merkmalen des Anspruchs 9. Vorteilhafte Ausgestaltungen sind in den Unteransprüchen angegeben.

Ein wichtiger Aspekt der Erfindung ist die Steuerung bzw. die Regelung eines Transportstroms von Vorformlingen entlang der Sortiereinrichtung, basierend auf den Erkenntnissen aus einer Positionserfassung der in einer Reihe transportierten Vorformlinge. Erfindungsgemäß werden die Vorformlinge zwischen den Förderrollen eines Rollensortierers transportiert, wobei zumindest einige Bereiche der Transportstrecke entlang der Förderrollen des Rollensortierers mit streckenbereicherfassenden Sensoren überwacht werden.

Erfindungsgemäß ist vorgesehen, dass die Sensorsignale zumindest einiger der streckenbereichsweise arbeitenden Sensoren an eine Steuerung übertragen werden. Diese Übertragung kann kabellos oder kabelgebunden ausgeführt sein. Bei einer kabellosen Übertragung kommt zum Beispiel eine optische oder eine funkbasierte Übertragung in Frage.

Bei der bereichsweisen Überwachung der Transportstrecke ist vorgesehen, dass mindestens ein streckenweise arbeitender Sensor eine längsausgedehnte Strecke von Vorformlingen messtechnisch erfasst und bei einer Messung Abstandsinformationen zu mindestens einem Paar aufeinanderfolgend transportierter Vorformlinge liefert. Mit derartigen Sensoren lässt sich auch ein Stauende einer Vorformlingsreihe erkennen. D.h. es lassen sich nicht nur Abstandsinformationen zwischen aufeinanderfolgenden Vorformlingen erkennen, sondern auch das Ende einer bewegten Kette hintereinander transportierter Vorformlinge. Bisher wurde ein Stauende einer Vorformlingsreihe mittels punktuell messender Sensoren detektiert. Üblicherweise wurden dafür Lichtschranken eingesetzt. Beim Durchlauf eines Vorformlings durch die Lichtschranke wurde ein Sensorsignal ausgelöst und es konnte festgestellt werden, dass sich ein Vorformling im Bereich der Lichtschranke befindet. Sofern die Lichtschranke nicht durch einen Vorformling unterbrochen ist, kann also im Bereich der Lichtschranke ein Stauende oder eine Lücke zwischen aufeinanderfolgenden Vorformlingen vorliegen. Über die Zeitdifferenz zwischen zwei detektierten Vorformlingen konnte mit diesem bekannten System in Kenntnis der Transportgeschwindigkeit ein Abstand zwischen zwei aufeinanderfolgenden Vorformlingen berechnet werden.

Mit Hilfe des erfindungsgemäßen Verfahrens, lassen sich Lücken zwischen Vorformlingen deutlich schneller und umfassender als bisher erkennen. Wird als streckenbereichsweise arbeitender Sensor beispielsweise ein Kamerasensor eingesetzt, kann sowohl die Lückenlage als auch der Lückenabstand zwischen aufeinanderfolgenden Vorformlingen mit einer einzigen Messung erfasst werden. Erfindungsgemäß können damit sogar mehrere Lücken zwischen verschiedenen Paaren aufeinanderfolgender Vorformlinge pro Messung erfasst werden. Die Informationen können für eine Steuerung bzw. Regelung der Transportstrecke weiterverarbeitet werden.

Ein wichtiger Aspekt der vorliegenden Lehre ist, dass die erfindungsgemäßen Sensoren Abstandsinformationen schon bei einer einzelnen Messung liefern. Damit ist eine kontinuierliche Lückenerfassung möglich. Eine Lückenerfassung soll nicht wie bisher üblich über die Zeit, sondern über Strecken- bzw. Flächenbereiche durchgeführt werden.

Im Hinblick auf die vorliegende Erfindung werden vorstehend und nachfolgend die Begriffe der Regelung sowie die Begriffe der Steuerung jeweils beispielhaft verwendet. Grundsätzlich können alle als Steuerung bezeichneten Vorgänge auch als Regelung realisiert werden und alle als Regelung bezeichneten Vorgänge lassen sich in einer vereinfachten Ausführung auch als Steuerung durchführen. Ebenfalls ist es möglich, bei den hinsichtlich einer Steuerung erläuterten Abläufen zusätzlich auch eine Regelung durchzuführen, oder bei den hinsichtlich der Regelung erläuterten Vorgängen zusätzlich auch eine Steuerung vorzunehmen.

Bei der vorliegenden Erfindung wird mit Hilfe der Streckenbereiche überwachenden Sensoren vorzugsweise die Lückenlage und/oder -größe zwischen aufeinanderfolgenden Vorformlingen überwacht. Die Erfassung wird vorzugsweise in der Zuführ- und/oder in der Orientierungs- und/oder in der Beruhigungsstrecke des Transportweges der Vorformlinge durchgeführt. Die Sensorsignale werden bevorzugt an eine Steuerung übertragen und es werden Steuersignale erzeugt, um Prozessparameter der Förder- und/oder Sortiereinrichtungen anzupassen. Ein Ziel dieser Prozessparametereinstellung ist das möglichst schnelle Schließen der sensorisch erfassten Lücken. Ziel kann auch sein, bei der Erkennung zu weniger oder zu enger Lücken die Nachführung von weiteren Vorformlingen zu reduzieren. Mit der Lückenerkennung und -auswertung ist unter anderem die Vorformlingsdichte bzw. die Vorformlingskonzentration zumindest in der Sortiereinrichtung regelbar.

Durch das erfindungsgemäß vorgeschlagene Verfahren und die erfindungsgemäßen Vorrichtungen kann eine wesentlich schwankungsärmere Sortierung der Vorformlinge erzielt werden. Zudem wird ein kontinuierlicher Vorformlingstransport insbesondere am Eingang der Zuführstrecke unterstützt und es kann ein stabileres Verhalten in Start- / Stoppsituationen erreicht werden.

Eine schnelle und effiziente Steuerung des Vorformlingstransports kann dadurch unterstützt werden, dass die Steuerung zumindest einige Steuersignale für die Einstellung von Prozessparametern der Fördereinrichtung und/oder der Sortiereinrichtung unter Verwendung eines Simulationsmodells und/oder einer Fuzzylogik erzeugt.

Klassische Regler wie PID-Regler benötigen üblicherweise die Eingabe eines mathematischen Modells des zu regelnden Systems. Für viele Anwendungen lassen sich aufgrund der Systemkomplexität keine oder nur unzureichende mathematische Modelle herleiten. Vereinfachte Modelle reichen in vielen Fällen nicht aus und führen zu unbrauchbaren Regelergebnissen. Mit Hilfe eines Fuzzy-Reglers, der auf Grundlage einer Fuzzylogik arbeitet, können Regelkreise bereitgestellt werden, die trotz fehlender oder unzureichender mathematischer Modelle gute Regelergebnisse liefern.

Eine Grundlage für die Verwendung einer Fuzzylogik ist die Angabe und die Verarbeitung von Regeln, dem sogenannten Expertenwissen. Üblicherweise liegt das Expertenwissen in sprachlich formulierten Regeln vor, die größtenteils Unschärfen aufweisen. Die Regeln können zum Beispiel Angaben enthalten, die nur bei Eintreten bestimmter Bedingungen zutreffen.

Für die Anwendung zur Regelung eines Systems können die Regeln sinnvoll mit logischen Operationen wie zum Beispiel UND / ODER verknüpft werden. Mit Hilfe einer gezielten Auswahl von Regeln und der sinnvollen Verknüpfung dieser Regeln auf Grundlage von zum Beispiel sensorisch erfassten Messgrößen eines Systems können Vorgabewerte bereitgestellt werden, die zur gezielten Einstellung bzw. Veränderung von Prozessparametern weiterverarbeitet werden können. Darauf abzielend kann zum Beispiel der sensorisch erfasste Lückenabstand mit anderen Prozessparametern wie zum Beispiel der Fördergeschwindigkeit des Steigförderers oder die Rollengeschwindigkeit eines Rollenförderers oder der gewünschten Produktionsgeschwindigkeit der Blasmaschine logisch verknüpft werden, um Vorgaben für die Einstellung einzelner Prozessparameter des Transportsystems zu generieren.

Die Verwendung eines Simulationsmodells und/oder einer Fuzzylogik ermöglicht eine äußerst robuste und effiziente Einstellung von Prozessparametern für das Erreichen eines optimierten Transportprozesses.

Für eine schnelle Gegensteuerung bzw. Ausregelung von auftretenden Störungen zum Beispiel in Form von Lücken im Bereich der transportierten Vorformlinge kann vorgesehen sein, dass das Simulationsmodell die physikalischen Abläufe des Transportvorganges simuliert. Das Simulationsmodell kann insbesondere als Systemmodell vorliegen, das das reale Transportsystem nachbildet. Bei der Anwendung eines Simulationsmodelles werden Zustandsgrößen wie zum Beispiel Lücken zwischen aufeinanderfolgenden Vorformlingen gemessen, mit simulierten Zustandsgrößen verglichen und eine Differenz zwischen dem realen System und dem Simulationsmodell durch Änderungen von Prozessparametern des realen Systems verringert. Zur Verbesserung bzw. Erweiterung des Regelalgorithmus kann vorgesehen sein, dass zusätzlich zur Nachbildung bzw. zur Simulation des Transportvorganges auch Prozessbereiche eines sich dem Transportvorgang anschließenden Herstellungsprozesses zur Blasformung von Behältern simuliert werden. Zusätzliche Prozessbereiche des Herstellungsprozesses können zum Beispiel der Übergang von dem Transportbereich an eine Heizeinrichtung oder die thermische Konditionierung der Vorformlinge sein.

Ein adaptives Simulationsmodell wird dadurch bereitgestellt, dass mindestens eine simulierte Zustandsgröße des Transportverfahrens mit einer Zustandsgröße des realen Transportverfahrens verglichen wird. Es kann insbesondere vorgesehen sein, dass das Simulationsmodell innerhalb eines geschlossenen Regelkreises verwendet wird. Besonders bevorzugt ist ein Simulationsmodell, das selbstlernend ausgeführt ist.

Bei der Einstellung der Prozessparameter ist unter anderem daran gedacht, dass die Drehzahl der Förderrollen als Prozessparameter der Sortiereinrichtung eingestellt wird. Alternativ oder zusätzlich kann vorgesehen sein, dass eine Fördergeschwindigkeit als Prozessparameter der Fördereinrichtung eingestellt wird.

Andere Prozessparameter können eine Staubremse des Rollenförderers betreffen. Weitere Parameter können die Steuerung eines an dem Rollenförderer angeordneten Staupaddels bzw. Kickerrads betreffen.

In einer Ausgestaltung der Erfindung kann vorgesehen sein, dass ein Steigförderer als Teil der Fördereinrichtung verwendet wird.

Bei der Verwendung eines Steigförderers kann vorgesehen sein, die Anzahl der mittels des Steigförderers in die Höhe beförderten Vorformlinge über die Veränderung der Steigfördererdrehzahl einzustellen. Die Einstellung kann zum Beispiel als Regelung auf Grundlage von mit den streckenbereichsweise arbeitenden Sensoren erfassten Abstandsinformationen durchgeführt werden.

Eine besonders gute sensorische Erfassung eines Streckenbereiches der Sortiereinrichtung kann dadurch erzielt werden, dass eine Kamera und/oder ein Lichtgittersensor als ein einen Streckenbereich sensorisch erfassender Sensor verwendet wird.

Bei der Verwendung eines Lichtgittersensors ist daran gedacht, einen durch den Lichtgittersensor aufgespannten Lichtvorhang auf eine Strecke von in einer Reihe transportierter Vorformlinge zu richten. Der optoelektronisch erzeugte Lichtvorhang kann dabei die Abstände zwischen aufeinanderfolgenden Vorformlingen bzw. das Ende einer Vorformlingsreihe erfassen. Bevorzugt wird ein in einer Ebene verlaufender Lichtvorhang des Lichtgittersensors so ausgerichtet, dass zumindest bereichsweise der Spalt zwischen den Förderrollen des Rollenförderers überwacht wird. Lichtgittersensoren bestehen typischerweise aus einer Sender- und einer Empfängereinheit, wobei eine Mehrzahl von in einer Reihe angeordneten Strahlungsquellen in der Sendeeinheit ein auf die Empfängereinheit gerichtetes Licht emittieren und dadurch einen engmaschigen Lichtvorhang bilden. Das Licht kann zum Beispiel Infrarot- oder Laserlicht sein. Für eine besonders gute Erkennung der Lücken aufeinanderfolgender Vorformlinge ist daran gedacht, den Gitterabstand des Lichtgittersensors dem Vorformlingsabstand entsprechend zu wählen. Der Gitterabstand kann zum Beispiel dem größten radialen Durchmesser eines Vorformlings entsprechen. Damit lassen sich auch kleinste Abstände erkennen. Auch das Fehlen eines Abstands kann erkannt werden.

Bei der Verwendung einer Kamera ist daran gedacht, die Kamera derart im Bereich der Sortiereinrichtung anzuordnen, dass zumindest ein zusammenhängender Bereich der in einer Reihe transportierten Vorformlinge optisch erfasst wird. Die Kamera kann dabei eingerichtet sein, Einzelbilder in der Art einer Fotokamera oder ein zeitlich kontinuierliches Videobild aufzunehmen. Die Kamerasignale können kontinuierlich und/oder in regelmäßigen Abständen auf Lücken zwischen den transportierten Vorformlingen hin ausgewertet werden. Für eine besonders gute Erfassung der Vorformlinge können zumindest einige der insbesondere als Lichtgittersensoren oder Kameras ausgebildeten Sensoren in Lotrichtung von unten, von schräg unten oder seitlich auf einen Bodenbereich bzw. auf einen seitlichen Wandungsbereich der Vorformlinge gerichtet sein.

Eine effiziente und genaue Steuerung der Prozessparameter wird dadurch unterstützt, dass aus der erfassten Abstandsinformation eine Abstandslage und/oder eine Abstandsweite zwischen jeweils einem Paar aufeinanderfolgender Vorformlinge ermittelt werden.

Offenbart ist auch eine Vorrichtung zur Steuerung eines Verfahrens zum Transport von Vorformlingen im Bereich einer Blasmaschine zur Blasformung von Behältern aus einem thermoplastischen Material entlang einer als Rollenförderer mit zwei sich insbesondere gegensinnig zueinander drehenden Förderrollen ausgebildeten Sortiereinrichtung insbesondere zur Steuerung eines erfindungsgemäßen Verfahrens, wobei die Vorrichtung eingerichtet ist, Sensordaten eines einen Streckenbereich der Sortiereinrichtung sensorisch erfassenden Sensors zu verarbeiten.

Für eine schnelle Steuerung bzw. Regelung des Verfahrens kann vorgesehen sein, dass die Vorrichtung ein Simulationsmodell und/oder eine Fuzzylogik enthält, mit der zumindest einige Steuersignale für die Einstellung von Prozessparametern der Fördereinrichtung und/oder der Sortiereinrichtung auf Grundlage einer durch den einen Streckenbereich abdeckenden Sensor erfassten Abstandsinformation erzeugbar sind.

Offenbart ist desweiteren eine Vorrichtung zur Blasformung von Behältern aus einem thermoplastischen Material mit einer als Rollenförderer mit zwei sich insbesondere gegensinnig zueinander drehenden Förderrollen ausgebildeten Sortiereinrichtung, wobei im Bereich der Sortiereinrichtung mindestens ein Sensor angeordnet ist, der mindestens einen in seinem Erfassungsbereich transportierten Vorformling sensorisch erfasst und ein Sensorsignal erzeugt, wobei die Vorrichtung Mittel aufweist zur Übertragung des Sensorsignals an eine Steuerung, und wobei die Steuerung eingerichtet ist, das Sensorsignal auszuwerten und in Abhängigkeit davon mindestens ein Steuersignal zu erzeugen, mit dem ein Prozessparameter der Sortiereinrichtung und/oder einer der Sortiereinrichtung vorgelagerten Fördereinrichtung zur Zuführung der Vorformlinge an die Sortiereinrichtung einstellbar ist, und wobei die Vorrichtung ausgebildet ist zur Durchführung eines erfindungsgemäßen Verfahrens, wobei mindestens einer der Sensoren eingerichtet ist, einen Streckenbereich der Sortiereinrichtung sensorisch zu erfassen, wobei das Sensorsignal dieses Sensors Informationen über mindestens einen Abstand eines Paares aufeinanderfolgender in dem Erfassungsbereich dieses Sensors transportierter Vorformlinge enthält, und dass die Steuerung eingerichtet ist, die Steuersignale zur Einstellung eines Prozessparameters der Fördereinrichtung und/oder der Sortiereinrichtung zumindest zeitweise abhängig von der erfassten Abstandsinformation zu erzeugen.

In einer bevorzugten Ausgestaltung ist vorgesehen, dass mindestens ein Sensor in Lotrichtung unterhalb oder schräg unterhalb oder seitlich zu den transportierten Vorformlingen angeordnet ist. Oberhalb der transportierten Vorformlinge können deckelartige Konstruktionen, Stege oder dergleichen an der Sortiereinrichtung vorgesehen sein, die den Kontakt zwischen dem Sensor und den Vorformlingen stören. Insbesondere wird dadurch der direkte Sichtkontakt für optisch arbeitende oder mit strahlungsbasierten Messverfahren arbeitende Sensoren gestört. Außerdem kann der Kontakt durch oberhalb der transportierten Vorformlinge unsortiert liegenden Vorformlinge gestört sein. Es versteht sich, dass für eine gute Erfassung der Lücken mehrere Sensoren vorgesehen sein können, die insbesondere jeweils in unterschiedlichen Ausrichtungen zu den transportierten Vorformlingen positioniert sind. Es kann also vorgesehen sein, Sensoren sowohl oberhalb als auch unterhalb und/oder seitlich zu den transportierten Vorformlingen anzuordnen. Auch im Hinblick auf das erfindungsgemäße Verfahren kann vorgesehen sein, die transportierten Vorformlinge von unten, schräg unten und/oder von der Seite sensorisch zu erfassen.

Ein kontinuierlicher und störungsarmer Transport der Vorformlinge an die Vorrichtung zur Blasformung von Behältern kann dadurch unterstützt werden, dass die Steuerung ein Simulationsmodell und/oder eine Fuzzylogik enthält, mit der zumindest einige Steuersignale für die Einstellung von Prozessparametern der Fördereinrichtung und/oder der Sortiereinrichtung auf Grundlage einer durch den einen Streckenbereich abdeckenden Sensor erfassten Abstandsinformation erzeugbar sind.

Varianten und Ausgestaltungen sowie die Vorzüge der erfindungsgemäßen Steuerung und der erfindungsgemäßen Blasmaschine ergeben sich aus den Erläuterungen zum erfindungsgemäßen Verfahren.

In den Zeichnungen sind Ausführungsbeispiele der Erfindung schematisch dargestellt. Es zeigen:
- Fig. 1: eine schematische Darstellung einer Transportstrecke für Vorformlinge zwischen einem Vorratsbehälter und einer Blasmaschine,
- Fig. 2: eine seitliche Darstellung zweier Förderrollen eines Rollenförderers und zwischen den Förderrollen transportierter Vorformlinge, und
- Fig. 3: eine Draufsicht auf die Förderrollen mit dem dazwischen transportierten Vorformlingen aus Fig. 2.

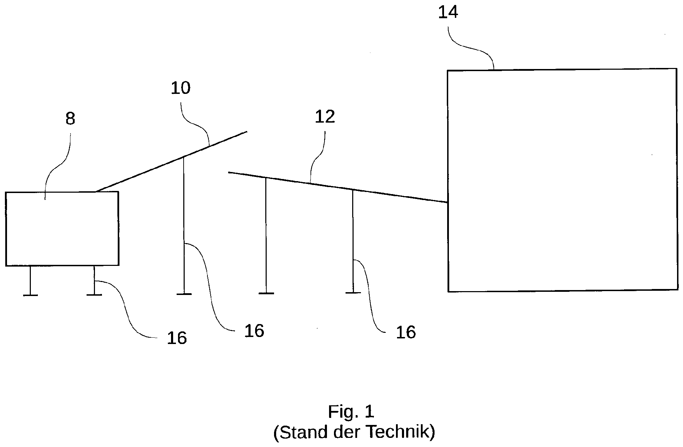

Fig. 1 zeigt rein schematisch eine Seitenansicht einer Transportstrecke, mit einer Fördereinrichtung 10 und einer in Transportrichtung stromabwärts zu der Fördereinrichtung 10 positionierten Sortiereinrichtung 12. Vorformlinge werden aus dem Vorratsbehälter 8 über die Fördereinrichtung 10 an die Sortiereinrichtung 12 gefördert und einer der Sortiereinrichtung 12 stromabwärts angeordneten Blasmaschine 14 übergeben. Zwischen der Sortiereinrichtung 12 und der Blasmaschine 14 kann eine Ablaufschiene (nicht dargestellt) angeordnet sein, die die sortierten Vorformlinge aus der Sortiereinrichtung 12 übernimmt und an die Blasmaschine 14 weitergibt. Statt einer Ablaufschiene kann auch eine Luftförderstrecke (nicht dargestellt) vorgesehen sein.

Die Fördereinrichtung 10, die Sortiereinrichtung 12 können mittels Standfüßen 16 vom Boden beabstandet sein. Zur Einstellung der Neigung der Transporteinrichtung 10 und/oder der Sortiereinrichtung 12 können die Standfüße 16 höhenverstellbar ausgeführt sein. Der Vorratsbehälter 8 und/oder eine etwaige Ablaufschiene bzw. Luftförderstrecke (nicht dargestellt) können ebenfalls über derartige Standfüße 16 vom Boden beabstandet sein.

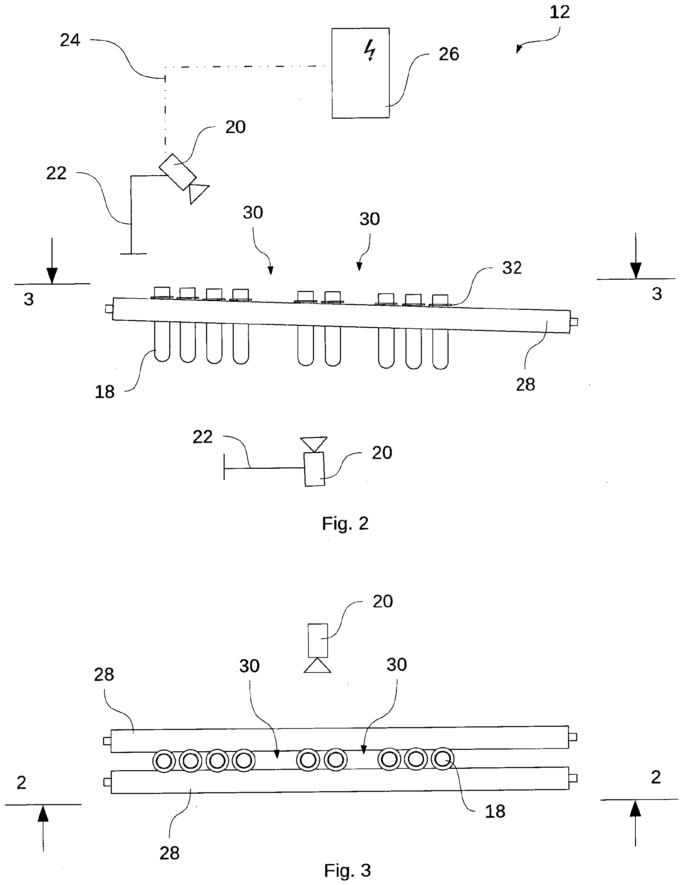

Fig. 2 zeigt einige Details einer als Rollenförderer ausgeführten Sortiereinrichtung 12. Die Sortiereinrichtung 12 umfasst zwei walzenartige Förderrollen 28, die zueinander beabstandet jeweils drehbar an einem Gestell der Sortiereinrichtung 12 gelagert sind. Zur Ausnutzung der Schwerkraft beim Transport der Vorformlinge entlang der Förderrollen bzw. einer Ablaufschiene, können die Sortiereinrichtung 12 und/oder eine Ablaufschiene gegenüber der Horizontalen geneigt angeordnet sein. Der Abstand der Förderrollen 28 zueinander ist zumindest bereichsweise so eingestellt, dass Vorformlinge 18 zwischen den Förderrollen 28 an ihren Stützringen 32 hängend transportiert werden können. Mögliche Ausgestaltung eines Rollenförderers der erfindungsgemäßen Art ist zum Beispiel in der ausdrücklich in Bezug genommenen Druckschrift DE 2005 046 508 A1 angegeben.

In Fig. 2 sind beispielhaft oberhalb und unterhalb der Sortiereinrichtung 12 angeordnete Sensoren 20 dargestellt, mit denen jeweils ein Streckenbereich einer Reihe von zwischen den Förderrollen 28 transportierten Vorformlingen 18 sensorisch erfasst werden kann. Alternativ oder zusätzlich kann vorgesehen sein, dass zumindest einige der Sensoren 20 einen gemeinsamen Streckenbereich erfassen. Vorzugsweise sind die Sensoren 20 jeweils mittels einer Halterung 22 an einem Gestell der Sortiereinrichtung 12 montiert. Für eine möglichst ungestörte sensorische Erfassung können die Sensoren 20 in Lotrichtung unterhalb der transportierten Vorformlinge 18 bzw. schräg unterhalb der transportierten Vorformlinge 18 angeordnet sein. Wie in Fig. 3 schematisch gezeigt, kann zusätzlich oder alternativ mindestens ein seitlich zu den transportierten Vorformlingen 18 positionierter Sensor 20 vorgesehen sein.

Sensordaten der Sensoren 20 sind über getrennte oder eine gemeinsame Übertragungsstrecke 24 an eine Steuerung 26 übertragbar. In der vereinfachten Darstellung der Figuren ist die Übertragungsstecke 24 nur einem Sensor 20 zugeordnet dargestellt. Es versteht sich, dass weitere Sensoren 20 über separate Übertragungsstrecken 24 und/oder über eine gemeinsame Übertragungsstrecke 24 mit der Steuerung 26 kommunizieren. Die Übertragungsstrecken 24 können kabelgebunden oder kabellos sein.

Mit Hilfe des Sensors 20 lassen sich Lücken 30 in der Reihe der zwischen den Förderrollen 28 transportierten Vorformlingen 18 erkennen. Mit einer Messung lassen sich insbesondere mehrere Lücken 30 über einen Sensor 20 gleichzeitig erkennen. Lücken 30 sind insbesondere Abstände zwischen zwei aufeinanderfolgenden Vorformlingen 18, die ein vordefiniertes maximales Abstandsmaß überschreiten.

Fig. 3 zeigt rein schematisch eine Draufsicht auf die etwa parallel zueinander beabschnitteten Förderrollen 28 aus Fig. 2 mit den zwischen den Förderrollen 28 transportierten Vorformlingen 18. In den Fig. 2 und 3 sind zwei Lücken 30 zwischen aufeinanderfolgenden Vorformlingen 18 erkennbar.

Anhand eines im Folgenden beispielhaft erläuterten Verfahrensablaufes mit Bezug auf die Figuren 1 bis 3 werden bevorzugte Teilschritte des erfindungsgemäßen Verfahrens zum Transport von Vorformlingen 18 startend von einem Vorratsbehälter 8 hin zu einer Blasmaschine 14 erläutert.

Ein früher Verfahrensschritt beim Transport der Vorformlinge 18 ist die Bereitstellung der Vorformlinge 18 in dem Vorratsbehälter 8. Dieser kann zum Beispiel in Art in einer Schüttung mit Vorformlingen 18 befüllt werden. Aus dem Vorratsbehälter 8 können die Vorformlinge 18 über eine als Steigförderer ausgeführte Fördereinrichtung 10 zur Übergabe an eine zum Beispiel als Rollenförderer ausgebildete Sortiereinrichtung 12 in eine Höhe transportiert werden. Vorzugsweise fallen die Vorformlinge 18 dazu durch eine Öffnung am Boden des Vorratsbehälters 8 auf ein Förderband der Fördereinrichtung 10.

Am Ende der Fördereinrichtung 10 werden die Vorformlinge 18 an die Sortiereinrichtung 12 übergeben. Vorzugsweise werden die Vorformlinge 18 dafür von der Fördereinrichtung 10 in einen Einfülltrichter (nicht dargestellt) gefördert, der die Vorformlinge 18 gezielt in einen Aufnahmebereich der Sortiereinrichtung 12 führt. Bei einer als Rollenförderer ausgebildeten Sortiereinrichtung 12 werden die Vorformlinge 18 zwischen zwei parallel mit einer Neigung angeordneten Förderrollen 28 an ihren Stützringen 32 hängend der Schwerkraft folgend bewegt. In der Sortiereinrichtung 12 werden die ungeordnet und ungerichtet übernommenen Vorformlinge 18 zur geordneten Weiterleitung an die Blasmaschine 14 ausgerichtet.

Vorformlinge 18, die beim Durchlaufen der als Rollenförderer ausgeführten Sortiereinrichtung 12 nicht korrekt ausgerichtet sind, werden von einem im Bereich der Förderrollen 28 angeordneten Kickerrad (nicht dargestellt) zurückgeworfen und/oder seitlich über Blasdüsen (nicht dargestellt) auf ein Rückführband (nicht dargestellt) befördert. Am Ende des Rückführbandes transportiert eine Vorformlingsrückführung (nicht dargestellt) die Vorformlinge 18 zurück an die Fördereinrichtung 10 oder in den Vorratsbehälter 8.

Beim Transport der Vorformlinge 18 entlang der Sortiereinrichtung 12 erfasst mindestens ein mit einer Steuerung 26 kommunizierender Sensor 20 streckenweise die Abstände aufeinanderfolgender Vorformlinge 18. Der Sensor 20 erfasst dabei längsausgedehnte Streckenbereiche, so dass anhand einzelner Messungen Abstandsinformationen zwischen den Vorformlingen 18 zügig ausgewertet werden können.

Übersteigt die Lückenanzahl einen vordefinierten Wert und/oder sind die Abstände zwischen aufeinanderfolgenden Vorformlingen 18 größer als ein vorbestimmter Wert, werden Prozessparameter der Sortiereinrichtung 12 und/oder einer der Sortiereinrichtung 12 vorgelagerten Fördereinrichtung 10 verändert. Beispielsweise kann vorgesehen sein, die Rollengeschwindigkeit der Förderrollen 28 zu reduzieren und/oder die Fördergeschwindigkeit des Steigförderers 10 zu erhöhen.

Gleichermaßen kann eine Veränderung der Prozessparameter vorgesehen sein, wenn zu wenige Lücken 30 erkannt werden also wenn die Anzahl der Lücken 30 unterhalb eines bestimmten Wertes liegt und/oder der Abstand zwischen aufeinanderfolgenden Vorformlingen 18 kleiner ist als ein vorgegebenes Maß. Dabei kann zum Beispiel vorgesehen sein, die Fördergeschwindigkeit des Rollenförderers zum Beispiel durch Erhöhung der Drehzahl der Förderrollen 28 zu erhöhen und/oder die Förderrate des Steigförderers 10 zu verringern. Zusätzlich oder alternativ kann die Bremskraft einer im Transportbereich der Vorformlinge 18 angeordneten Staubremse erhöht oder verringert werden.

### Bezugszeichenliste

- 10: Fördereinrichtung
- 12: Sortiereinrichtung
- 14: Blasmaschine
- 16: Standfüße
- 18: Vorformlinge
- 20: Sensor
- 22: Halterung
- 24: Übertragungsstrecke
- 26: Steuerung
- 28: Förderrollen
- 30: Lücken
- 32: Stützringe

## Patentansprüche

1. Verfahren zum Transport von Vorformlingen (18) im Bereich einer Blasmaschine (14) zur Blasformung von Behältern aus einem thermoplastischen Material entlang einer als Rollensortierer mit zwei sich insbesondere gegensinnig zueinander drehenden Förderrollen (28) ausgebildeten Sortiereinrichtung (12), wobei mindestens ein im Bereich der Sortiereinrichtung (12) angeordneter Sensor (20) mindestens einen in seinem Erfassungsbereich transportierten Vorformling (18) sensorisch erfasst und ein Sensorsignal erzeugt, wobei das Sensorsignal zur Verarbeitung an eine Steuerung (26) übertragen wird, die Steuerung (26) das Sensorsignal auswertet und in Abhängigkeit davon mindestens ein Steuersignal erzeugt, und wobei in Abhängigkeit von mindestens einem der Steuersignale ein Prozessparameter der Sortiereinrichtung (12) und/oder einer der Sortiereinrichtung (12) vorgelagerten Fördereinrichtung (10) zur Zuführung der Vorformlinge (18) an die Sortiereinrichtung (12) eingestellt wird, wobei mindestens einer der Sensoren (20) einen Streckenbereich der Sortiereinrichtung (12) sensorisch erfasst und das Sensorsignal dieses Sensors (20) Informationen über mindestens einen Abstand eines Paares aufeinanderfolgender in dem Erfassungsbereich dieses Sensors (20) transportierter Vorformlinge (18) enthält, und dass die Steuersignale zur Einstellung eines Prozessparameters der Fördereinrichtung (10) und/oder der Sortiereinrichtung (12) zumindest zeitweise abhängig sind von der erfassten Abstandsinformation, **dadurch gekennzeichnet, dass** aus der erfassten Abstandsinformation eine Abstandslage und/oder eine Abstandsweite zwischen jeweils einem Paar aufeinanderfolgender Vorformlinge (18) ermittelt wird.

2. Verfahren nach Anspruch 1, **dadurch gekennzeichnet, dass** die Steuerung (26) zumindest einige Steuersignale für die Einstellung von Prozessparametern der Fördereinrichtung (10) und/oder der Sortiereinrichtung (12) unter Verwendung eines Simulationsmodells und/oder einer Fuzzylogik erzeugt.

3. Verfahren nach einem der Ansprüche 1 oder 2, **dadurch gekennzeichnet, dass** die Drehzahl der Förderrollen (28) als Prozessparameter der Sortiereinrichtung (12) eingestellt wird.

4. Verfahren nach einem der vorangegangenen Ansprüche, **dadurch gekennzeichnet, dass** eine Fördergeschwindigkeit als Prozessparameter der Fördereinrichtung (10) eingestellt wird.

5. Verfahren nach einem der vorangegangenen Ansprüche, **dadurch gekennzeichnet, dass** ein Steigförderer als Teil der Fördereinrichtung (10) verwendet wird.

6. Verfahren nach einem der vorangegangenen Ansprüche, **dadurch gekennzeichnet, dass** eine Kamera und/oder ein Lichtgittersensor als ein den Streckenbereich sensorisch erfassender Sensor (20) verwendet wird.

7. Steuerungseinrichtung, die zur Steuerung eines Vorformlingstransportes nach einem Verfahren gemäß einem der Ansprüche 1 bis 6 ausgebildet ist, nämlich zur Steuerung des Transports von Vorformlingen (18) im Bereich einer Blasmaschine (14) zur Blasformung von Behältern aus einem thermoplastischen Material entlang einer als Rollensortierer mit zwei sich insbesondere gegensinnig zueinander drehenden Förderrollen (28) ausgebildeten Sortiereinrichtung (12), wobei die Steuerungseinrichtung eingerichtet ist, Sensordaten eines einen Streckenbereich der Sortiereinrichtung (12) sensorisch erfassenden Sensors (20) zu verarbeiten, wobei das Sensorsignal dieses Sensors (20) Informationen über mindestens einen Abstand eines Paares aufeinanderfolgender in dem Erfassungsbereich dieses Sensors (20) transportierter Vorformlinge (18) enthält, wobei die Steuerungseinrichtung eingerichtet ist, die Steuersignale zur Einstellung eines Prozessparameters einer der Sortiereinrichtung (12) vorgelagerten Fördereinrichtung (10) zur Zuführung der Vorformlinge (18) an die Sortiereinrichtung (12) und/oder der Sortiereinrichtung (12) zumindest zeitweise abhängig von der erfassten Abstandsinformation zu erzeugen, **dadurch gekennzeichnet, dass** die Steuerungseinrichtung so ausgeführt ist, dass aus der erfassten Abstandsinformation eine Abstandslage und/oder eine Abstandsweite zwischen jeweils einem Paar aufeinanderfolgender Vorformlinge (18) ermittelt wird.

8. Steuerungseinrichtung nach Anspruch 7, **dadurch gekennzeichnet, dass** die Steuerungseinrichtung ein Simulationsmodell und/oder eine Fuzzylogik enthält, mit der zumindest einige Steuersignale für die Einstellung von Prozessparametern der Fördereinrichtung (10) und/oder der Sortiereinrichtung (12) auf Grundlage einer durch den einen Streckenbereich abdeckenden Sensor (20) erfassten Abstandsinformation erzeugbar sind.

9. Vorrichtung zur Blasformung von Behältern aus einem thermoplastischen Material mit einer als Rollensortierer mit zwei sich insbesondere gegensinnig zueinander drehenden Förderrollen (28) ausgebildeten Sortiereinrichtung (12), wobei im Bereich der Sortiereinrichtung (12) mindestens ein Sensor (20) angeordnet ist, der mindestens einen in seinem Erfassungsbereich transportierten Vorformling (18) sensorisch erfasst und ein Sensorsignal erzeugt, wobei die Vorrichtung Mittel aufweist zur Übertragung des Sensorsignals an eine Steuerung (26), und wobei die Steuerung (26) eingerichtet ist, das Sensorsignal auszuwerten und in Abhängigkeit davon mindestens ein Steuersignal zu erzeugen, mit dem ein Prozessparameter der Sortiereinrichtung (12) und/oder einer der Sortiereinrichtung (12) vorgelagerten Fördereinrichtung (10) zur Zuführung von Vorformlingen (18) an die Sortiereinrichtung (12) einstellbar ist, und wobei die Vorrichtung ausgebildet ist zur Durchführung eines der Verfahren der Ansprüche 1 bis 7, wobei mindestens einer der Sensoren (20) eingerichtet ist, einen Streckenbereich der Sortiereinrichtung (12) sensorisch zu erfassen, wobei das Sensorsignal dieses Sensors (20) Informationen über mindestens einen Abstand eines Paares aufeinanderfolgender in dem Erfassungsbereich dieses Sensors (20) transportierter Vorformlinge (18) enthält, und dass die Steuerung eingerichtet ist, die Steuersignale zur Einstellung eines Prozessparameters der Fördereinrichtung (10) und/oder der Sortiereinrichtung (12) zumindest zeitweise abhängig von der erfassten Abstandsinformation zu erzeugen, **dadurch gekennzeichnet, dass** die Steuerung so ausgeführt ist, dass aus der erfassten Abstandsinformation eine Abstandslage und/oder eine Abstandsweite zwischen jeweils einem Paar aufeinanderfolgender Vorformlinge (18) ermittelt wird.

10. Vorrichtung nach Anspruch 9, **dadurch gekennzeichnet, dass** mindestens ein Sensor (20) in Lotrichtung unterhalb oder schräg unterhalb oder seitlich zu den transportierten Vorformlingen (20) angeordnet ist.

11. Vorrichtung nach einem der Ansprüche 9 oder 10, **dadurch gekennzeichnet, dass** die Steuerung (26) ein Simulationsmodell und/oder eine Fuzzylogik enthält, mit der zumindest einige Steuersignale für die Einstellung von Prozessparametern der Fördereinrichtung (10) und/oder der Sortiereinrichtung (12) auf Grundlage einer durch den einen Streckenbereich abdeckenden Sensor (20) erfassten Abstandsinformation erzeugbar sind.

## Claims

1. Method for transporting preforms (18) in the area of a blow moulding machine (14) for blow moulding containers from a thermoplastic material along a sorting device (12) configured as a roller sorter with two conveyor rollers (28) especially rotating in opposite directions to one another, wherein at least one sensor (20) arranged in the area of the sorting device (12) detects at least one preform (18) transported in its detection area and generates a sensor signal, wherein the sensor signal is transmitted to a control system (26) for processing, the control system (26) evaluates the sensor signal and generates at least one control signal as a function thereof, and wherein a process parameter of the sorting device (12) and/or of a conveying device (10) upstream of the sorting device (12) for supplying the preforms (18) to the sorting device (12) is adjusted as a function of at least one of the control signals, wherein a section of the sorting device (12) is detected by at least one of the sensors (20), the sensor signal of this sensor (20) containing data on at least one gap between a pair of preforms (18) being transported successively in the detection area of this sensor (20), and wherein the control signals for adjusting a process parameter of the conveying device (10) and/or of the sorting device (12) are, at least for certain periods of time, dependent on the acquired gap data,
**characterised in that**
- a gap position and/or a gap distance between individual pairs of successive preforms (18) is determined from the acquired gap data.

2. Method according to claim 1, **characterised in that** the control system (26) generates at least a few control signals for adjusting process parameters of the conveying device (10) and/or of the sorting device (12) by using a simulation model and/or a fuzzy logic.

3. Method according to anyone of the claims 1 or 2, **characterised in that** the rotational speed of the conveyor rollers (28) is adjusted as the process parameter of the sorting device (12).

4. Method according to any preceding claim, **characterised in that** a conveying speed is adjusted as the process parameter of the conveying device (10).

5. Method according to any preceding claim, **characterised in that** an ascending conveyor is used as part of the conveying device (10).

6. Method according to any preceding claim, **characterised in that** a camera and/or a light grid sensor is used as a sensor (20) detecting the section.

7. Control device configured for controlling a transport of preforms using a method according to anyone of the claims 1 to 6, namely for controlling the transport of preforms (18) in the area of a blow moulding machine (14) for blow moulding containers from a thermoplastic material along a sorting device (12) configured as a roller sorter with two conveyor rollers (28) especially rotating in opposite directions to one another, wherein the control device is adapted to process sensor data of a sensor (20) detecting a section of the sorting device (12), wherein the sensor signal of this sensor (20) contains data on at least one gap between a pair of preforms (18) being transported successively in the detection area of this sensor (20), wherein the control device is adapted to generate the control signals for adjusting a process parameter of a conveying device (10) upstream of the sorting device (12) for supplying the preforms (18) to the sorting device (12) and/or of the sorting device (12), at least for certain periods of time dependent on the acquired gap data, **characterised in that** the control device is adapted such that a gap position and/or a gap distance between individual pairs of successive preforms (18) is determined from the acquired gap data.

8. Control device according to claim 7, **characterised in that** the control device contains a simulation model and/or a fuzzy logic by which at least a few control signals for adjusting the process parameters of the conveying device (10) and/or of the sorting device (12) can be generated based on gap data acquired by the sensor (20) covering the section.

9. Device for blow moulding containers from a thermoplastic material with a sorting device (12) configured as a roller sorter with two conveyor rollers (28) especially rotating in opposite directions to one another, wherein at least one sensor (20) arranged in the area of the sorting device (12) detects at least one preform (18) transported in its detection area and generates a sensor signal, wherein the device comprises means for transmitting the sensor signal to a control system (26), and wherein the control system (26) is adapted to evaluate the sensor signal and generate at least one control signal as a function thereof, which can be used to adjust a process parameter of the sorting device (12) and/or of a conveying device (10) upstream of the sorting device (12) for supplying preforms (18) to the sorting device (12), and wherein the device is configured for carrying out one of the methods of claims 1 to 7, wherein at least one of the sensors (20) is adapted to detect a section of the sorting device (12), wherein the sensor signal of this sensor (20) contains data on at least one gap between a pair of preforms (18) being transported successively in the detection area of this sensor (20), and wherein the control system is adapted to generate the control signals for adjusting a process parameter of the conveying device (10) and/or of the sorting device (12) at least for certain periods of time dependent on the acquired gap data, **characterised in that** the control system is configured such that a gap position and/or a gap distance between individual pairs of successive preforms (18) is determined from the acquired gap data.

10. Device according to claim 9, **characterised in that** at least one sensor (20) is arranged vertically underneath or at an angle underneath or to a side of the transported preforms (18).

11. Device according to anyone of the claims 9 or 10, **characterised in that** the control system (26) contains a simulation model and/or a fuzzy logic by which at least a few control signals for adjusting the process parameters of the conveying device (10) and/or of the sorting device (12) can be generated based on gap data acquired by the sensor (20) covering the section.

## Revendications

1. Procédé de transport de préformes (18) dans la zone d'une machine de moulage par soufflage (14) de récipients en un matériau thermoplastique le long d'un dispositif de tri (12) conçu sous forme de trieur à galets avec deux galets de transport (28) tournant notamment en sens contraire l'un de l'autre, un détecteur (20) au moins agencé dans la zone du dispositif de tri (12) détectant au moins une préforme (18) transportée dans sa zone de couverture et générant un signal de détection, ce signal étant transmis à une commande (26) qui analyse le signal et, en fonction de celui-ci, génère au moins un signal de commande, un paramètre de processus du dispositif de tri (12) et/ou du dispositif de transport (10) placé en amont du dispositif de tri (12) pour l'amenée des préformes (18) vers le dispositif de tri (12) étant ajusté en fonction d'au moins l'un des signaux de commande, l'un au moins des détecteurs (20) couvrant une partie de la section du dispositif de tri (12) et le signal de ce détecteur (20) contenant des informations sur au moins un espacement d'une paire de préformes (18) transportées l'une à la suite de l'autre dans la zone couverte par ce détecteur (20), les signaux de commande pour l'ajustage d'un paramètre de processus du dispositif de transport (10) et/ou du dispositif de tri (12) dépendant temporairement au moins des données d'espacement, **caractérisé en ce qu'**une position et/ou une longueur de l'espacement est respectivement déterminée à partir des données d'espacement pour une paire de préformes (18) consécutives.

2. Procédé selon la revendication 1, **caractérisé en ce que** la commande (26) génère au moins certains signaux de commande pour l'ajustage de paramètres de processus du dispositif de transport (10) et/ou du dispositif de tri (12) en faisant appel à un modèle de simulation et/ou une logique floue.

3. Procédé selon l'une des revendications 1 ou 2, **caractérisé en ce que** la vitesse de rotation des galets de transport (28) est ajustée comme paramètre de processus du dispositif de tri (12).

4. Procédé selon l'une des revendications précédentes, **caractérisé en ce qu'**une vitesse de transport est ajustée comme paramètre de processus du dispositif de transport (10).

5. Procédé selon l'une des revendications précédentes, **caractérisé en ce qu'**un convoyeur ascendant est utilisé comme partie du dispositif de transport (10).

6. Procédé selon l'une des revendications précédentes, **caractérisé en ce qu'**une caméra et/ou un détecteur photoélectrique est utilisé en guise de détecteur (20) couvrant la section à observer.

7. Dispositif de commande conçu pour la commande d'un transport de préformes conformément à un procédé selon l'une des revendications 1 à 6, à savoir pour le transport de préformes (18) dans la zone d'une machine de moulage par soufflage (14) de récipients en un matériau thermoplastique le long d'un dispositif de tri (12) conçu sous forme de trieur à galets avec deux galets de transport (28) tournant notamment en sens contraire l'un de l'autre, le dispositif de commande étant aménagé pour traiter les données d'un détecteur (20) couvrant une partie de la section du dispositif de tri (12) et le signal de ce détecteur (20) contenant des informations sur au moins un espacement d'une paire de préformes (18) transportées l'une à la suite de l'autre dans la zone couverte par ce détecteur (20), le dispositif de commande étant aménagé pour générer, temporairement au moins en fonction des données d'espacement, les signaux de commande pour l'ajustage d'un paramètre de processus du dispositif de transport (10) placé en amont du dispositif de tri (12) pour l'amenée des préformes (18) vers le dispositif de tri (12) et/ou du dispositif de tri (12) **caractérisé en ce que** le dispositif de commande est conçu pour déterminer respectivement à partir des données d'espacement une position et/ou une longueur de l'espacement pour une paire de préformes (18) consécutives.

8. Dispositif de commande selon la revendication 7, **caractérisé en ce que** le dispositif de commande comporte un modèle de simulation et/ou une logique floue permettant de générer au moins certains signaux de commande pour l'ajustage de paramètres de processus du dispositif de transport (10) et/ou du dispositif de tri (12) sur la base des données d'espacement saisies par un détecteur (20) couvrant une certaine section.

9. Dispositif de moulage par soufflage de récipients en un matériau thermoplastique doté d'un dispositif de tri (12) conçu sous forme de trieur à galets avec deux galets de transport (28) tournant notamment en sens contraire l'un de l'autre, un détecteur (20) au moins étant agencé dans la zone du dispositif de tri (12) et détectant au moins une préforme (18) transportée dans sa zone de couverture et générant un signal de détection, le dispositif présentant des moyens de transmission du signal de détection à une commande (26) conçue pour analyser le signal et, en fonction de celui-ci, générer au moins un signal de commande permettant d'ajuster un paramètre de processus du dispositif de tri (12) et/ou d'un dispositif de transport (10) placé en amont du dispositif de tri (12) pour l'amenée des préformes (18) vers le dispositif de tri (12), et le dispositif étant conçu pour mettre en oeuvre l'un des procédés des revendications 1 à 7, l'un au moins des détecteurs (20) étant conçu pour couvrir une partie de la section du dispositif de tri (12), le signal de ce détecteur (20) contenant des informations sur au moins un espacement d'une paire de préformes (18) transportées l'une à la suite de l'autre dans la zone couverte par ce détecteur (20), la commande étant conçue pour générer les signaux de commande pour l'ajustage d'un paramètre de processus du dispositif de transport (10) et/ou du dispositif de tri (12) temporairement au moins en fonction des données d'espacement saisies, **caractérisé en ce que** la commande est conçue pour déterminer respectivement à partir des données d'espacement une position et/ou une longueur de l'espacement pour une paire de préformes (18) consécutives.

10. Dispositif selon la revendication 9, **caractérisé en ce que** un détecteur (20) au moins est agencé perpendiculairement sous, diagonalement sous les préformes (20) transportées ou latéralement par rapport à celles-ci.

11. Dispositif selon l'une des revendications 9 ou 10, **caractérisé en ce que** la commande (26) comporte un modèle de simulation et/ou une logique floue permettant de générer au moins certains signaux de commande pour l'ajustage de paramètres de processus du dispositif de transport (10) et/ou du dispositif de tri (12) sur la base des données d'espacement saisies par un détecteur (20) couvrant une certaine section.
